# FASCICULE DE BREVET EUROPEEN

(11) **EP 3 983 296 B1**
(45) Date de publication et mention de la délivrance du brevet: **28.06.2023**
(21) Numéro de dépôt: 20725694.2
(22) Date de dépôt: 11.05.2020
(51) Int. Cl.: B64F 1/28, B60P 3/22

(54) **VÉHICULE CITERNE AVITAILLEUR**
VERSORGUNGSTANKER
SUPPLY TANKER

(30) Priorité: 11.06.2019 FR 1906154
(43) Date de publication de la demande: 20.04.2022
(73) Titulaire: Groupe Pourprix, 69400 Arnas (FR)
(72) Inventeur: HECKY, Stéphane, 69250 FLEURIEU-SUR-SAONE (FR)
(74) Mandataire: Cabinet Bleger-Rhein-Poupon
(86) Numéro de dépôt international: PCT/EP2020/063031
(87) Numéro de publication internationale: WO 2020/249335

(56) Documents cités:
- WO-A1-94/14652
- DE-A1-102005 053 206
- DE-U1-202012 009 281
- JP-A- S62 137 300

## Description

La présente invention a pour objet un véhicule citerne avitailleur, essentiellement destiné à être utilisé dans le domaine aéroportuaire . Des exemples de l'art antérieur sont donnés par les documents JPS62137300 A, WO9414652 A1, DE102005053206 A1 et DE202012009281 U1.

Un tel véhicule doit présenter certaines caractéristiques du fait de son usage particulier, notamment de dimensionnement puisqu'il doit se déplacer entre les avions, et sous les ailes de ceux-ci. De plus, il doit présenter des moyens permettant à l'opérateur de brancher sous une aile d'avion des tuyaux d'alimentation en carburant, à partir d'un module de distribution.

Ainsi, on utilise actuellement des châssis de camions citernes routiers que l'on adapte à cet usage particulier, c'est-à-dire qu'essentiellement on réduit sa hauteur et on lui adapte une nacelle élévatrice.

Outre le fait qu'un tel véhicule n'est pas optimisé ergonomiquement pour l'usage auquel il est destiné, il présente, du fait de son origine, des caractéristiques inutilisées, donc inutiles, ce qui constitue un surcoût.

La présente invention a pour but de remédier à cet inconvénient en proposant un véhicule citerne avitailleur, conçu spécifiquement pour répondre au cahier des charges.

Le véhicule citerne avitailleur selon l'invention, comprend un châssis reposant sur des essieux, et portant une citerne, un module de distribution de carburant, une cabine ainsi qu'une nacelle élévatrice, et il se caractérise en ce que ledit châssis présente au moins deux sous-ensembles articulés entre eux, dont un premier, disposé à l'avant, porte ladite cabine et ladite nacelle, tandis qu'un autre disposé derrière ledit premier sous-ensemble, porte ledit module de distribution et ladite citerne ; et en ce que ledit premier sous-ensemble comporte un essieu en avant duquel et sous l'axe duquel s'étend une plateforme supportant, juxtaposées transversalement, d'un côté ladite cabine et de l'autre côté ladite nacelle.

La plateforme surbaissée permet d'une part que la cabine soit pratiquement de plain-pied pour l'opérateur, sachant qu'il doit fréquemment y accéder et en sortir, et d'autre part, loger un dispositif élévateur la nacelle, de type pantographe, de grande amplitude.

Selon une caractéristique additionnelle du véhicule citerne avitailleur selon l'invention, le sous-ensemble qui porte la citerne est porté par au moins un essieu, lequel est moteur.

Du fait de l'abaissement de la cabine, il n'est pas possible de loger groupe moteur dans le sous-ensemble avant, la propulsion est donc réalisée depuis le sous-ensemble arrière.

Le sous-ensemble arrière est mû par un groupe moteur qui peut être de tous types, thermique, électrique ou hybride.

On notera qu'il est possible en complément de la propulsion du sous-ensemble arrière, que l'une au moins des roues avant soit motrice, au travers, non limitativement, d'un moteur roue par exemple.

Selon une autre caractéristique additionnelle du véhicule citerne avitailleur selon l'invention, l'essieu du sous-ensemble avant est un essieu fixe.

Selon une autre caractéristique additionnelle du véhicule citerne avitailleur selon l'invention, le sous-ensemble arrière est de construction modulable.

Selon une autre caractéristique additionnelle du véhicule citerne avitailleur selon l'invention, le sous-ensemble arrière comporte deux parties, la seconde consistant en une remorque.

Les avantages et les caractéristiques du véhicule citerne avitailleur selon l'invention, ressortiront plus clairement de la description qui suit et qui se rapporte au dessin annexé, lequel en représente plusieurs modes de réalisation non limitatifs.

Dans le dessin annexé:
- la figure 1 représente une vue en perspective d'un véhicule citerne avitailleur selon l'invention.
- la figure 2 représente une vue en perspective sous un autre angle du même véhicule citerne avitailleur
- la figure 3 représente la même vue en perspective du véhicule citerne avitailleur dans une autre configuration d'utilisation.
- la figure 4 représente une vue en perspective d'une variante du même véhicule citerne avitailleur selon l'invention.

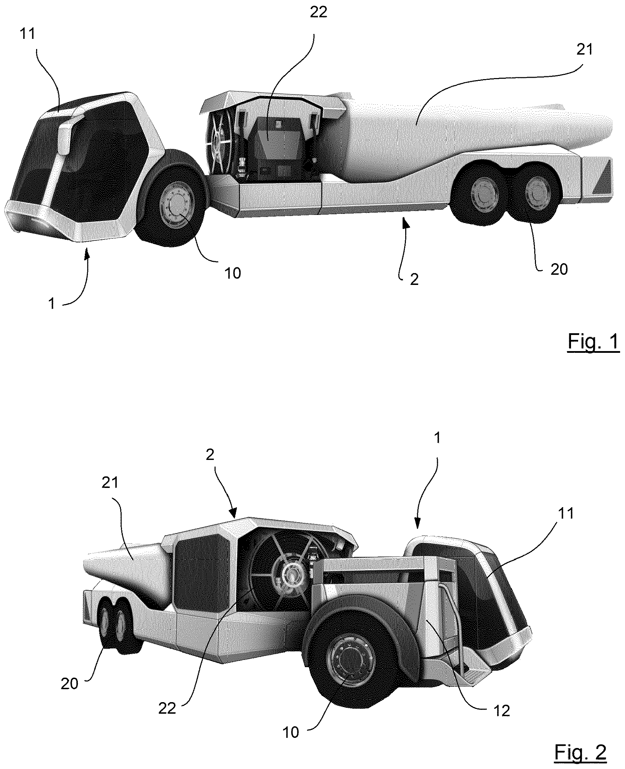

En référence figures 1, 2 et 3, on peut voir qu'un véhicule citerne avitailleur selon l'invention, comporte un châssis articulé présentant deux sous-ensembles, un sous-ensemble avant 1 et un sous-ensemble arrière 2.

Le sous-ensemble avant 1 comporte un essieu 10, une cabine 1 et une nacelle 12 montée sur un élévateur 13.

La cabine 1 est surbaissée, sa base étant plus basse que l'axe de l'essieu 10, ce qui permet d'y accéder aisément.

Le sous-ensemble 2 comporte un double essieu 20, une citerne 21 et un module 22 de distribution de carburant.

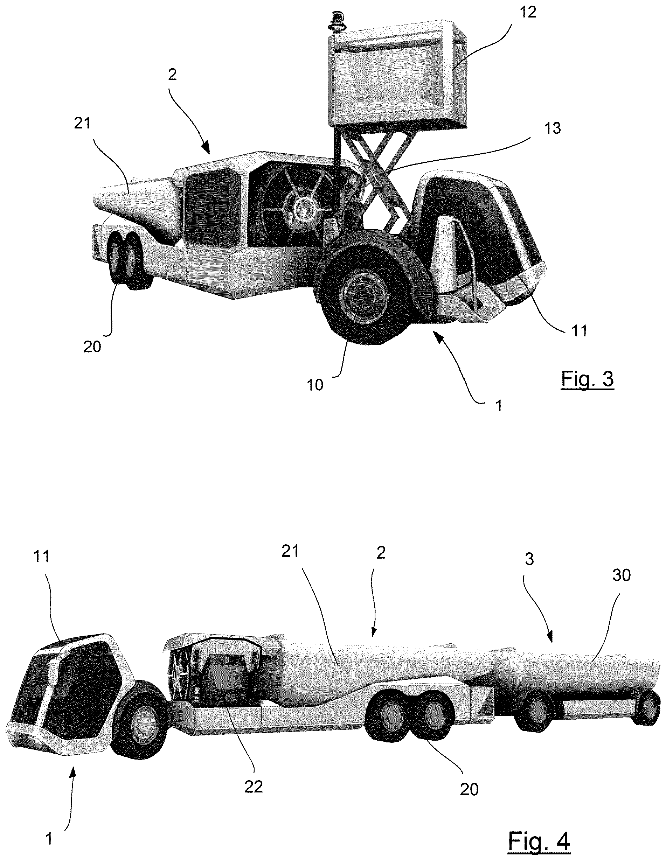

En référence à la figure 4 on peut voir l'adjonction au sous-ensemble 2 d'une remorque 3 portant une citerne 30.

## Revendications

1. Véhicule citerne avitailleur comprenant un châssis reposant sur des essieux, et portant une citerne (21), un module (22) de distribution de carburant, une cabine (11) ainsi qu'une nacelle élévatrice (12), ledit châssis présentant au moins deux sous-ensembles (1, 2) dont un premier (1), disposé à l'avant, comporte un essieu (10) et porte une plateforme supportant, juxtaposées transversalement, d'un côté ladite cabine (11) et de l'autre côté ladite nacelle (12), tandis qu'un autre sous-ensemble (2) disposé derrière ledit premier sous-ensemble (1), porte ledit module de distribution (22) et ladite citerne (21), **caractérisé en ce que** lesdits deux sous-ensembles (1, 2) sont articulés entre eux, et **en ce que** ladite plateforme s'étend en avant et sous l'axe dudit essieu (10).

2. Véhicule citerne avitailleur selon la revendication 1, **caractérisé en ce que** le sous-ensemble (2) qui porte la citerne (21) est porté par au moins un essieu (20), lequel est moteur.

3. Véhicule citerne avitailleur selon la revendication 1 ou la revendication 2, **caractérisé en ce que** l'essieu (10) du sous-ensemble avant (1) est un essieu fixe.

4. Véhicule citerne avitailleur selon l'une quelconque des revendications 1 à 3, **caractérisé en ce que** le sous-ensemble arrière (2) est de construction modulable.

5. Véhicule citerne avitailleur selon l'une quelconque des revendications 1 à 4, **caractérisé en ce que** le sous-ensemble arrière (2) comporte deux parties, la seconde consistant en une remorque (3).

## Patentansprüche

1. Tankfahrzeug, umfassend ein Fahrgestell, das auf Achsen aufliegt, und einen Tank (21), ein Modul (22) für Kraftstoffverteilung, eine Kabine (11) sowie eine Hebebühne (12) trägt, wobei das Fahrgestell mindestens zwei Unterbaugruppen (1, 2) aufweist, von denen eine erste (1) auf der Vorderseite angeordnet ist, eine Achse (10) beinhaltet und eine Plattform trägt, die einerseits die Kabine (11) und andererseits die Bühne (12) stützt, die quer nebeneinander liegen, während eine andere Unterbaugruppe (2), die hinter der ersten Unterbaugruppe (1) angeordnet ist, das Verteilungsmodul (22) und den Tank (21) trägt, **dadurch gekennzeichnet, dass** die zwei Unterbaugruppen (1, 2) gelenkig miteinander verbunden sind, und dass sich die Plattform vorwärts und unter der Mittellinie der Achse (10) erstreckt.

2. Tankfahrzeug nach Anspruch 1, **dadurch gekennzeichnet, dass** die Unterbaugruppe (2), die den Tank (21) trägt, durch mindestens eine Achse (20) getragen wird, die ein Motor ist.

3. Tankfahrzeug nach Anspruch 1 oder 2, **dadurch gekennzeichnet, dass** die Achse (10) der vorderen Unterbaugruppe (1) eine starre Achse ist.

4. Tankfahrzeug nach einem der Ansprüche 1 bis 3,
**dadurch gekennzeichnet, dass** die hintere Unterbaugruppe (2) eine modulierbare Konstruktion vorweist.

5. Tankfahrzeug nach einem der Ansprüche 1 bis 4,
**dadurch gekennzeichnet, dass** die hintere Unterbaugruppe (2) zwei Teile umfasst, wobei das zweite aus einem Anhänger (3) besteht.

## Claims

1. A refueling tanker vehicle comprising a chassis resting on axles, and carrying a tank (21), a fuel distribution module (22), a cab (11) and an aerial basket (12), said chassis having at least two sub-assemblies (1, 2) of which a first assembly (1), arranged at the front, includes an axle (10) and carries a platform supporting, transversely juxtaposed, on one side said cab (11) and on the other side said basket (12), while another sub-assembly (2) arranged behind said first sub-assembly (1), carries said distribution module (22) and said tank (21), **characterized in that** said two sub-assemblies (1, 2) are articulated therebetween, and **in that** said platform extends forward and under the axis of said axle (10).

2. The refueling tanker vehicle according to claim 1, **characterized in that** the sub-assembly (2) which carries the tank (21) is carried by at least one axle (20) which is a drive axle.

3. The refueling tanker vehicle according to claim 1 or claim 2, **characterized in that** the axle (10) of the front sub-assembly (1) is a fixed axle.

4. The refueling tanker vehicle according to any one of claims 1 to 3, **characterized in that** the rear sub-assembly (2) is of modular construction.

5. The refueling tanker vehicle according to any one of claims 1 to 4, **characterized in that** the rear sub-assembly (2) includes two parts, the second part consisting of a trailer (3).
